# EUROPÄISCHE PATENTSCHRIFT

(11) **EP 2 762 271 B1**
(45) Veröffentlichungstag und Bekanntmachung des Hinweises auf die Patenterteilung: **21.09.2016**
(21) Anmeldenummer: 14153631.8
(22) Anmeldetag: 03.02.2014
(51) Int. Cl.: B23Q 37/00

(54) **MODULSYSTEM ZUR HALTERUNG VON BEARBEITUNGSMODULEN EINER BEARBEITUNGSANLAGE SOWIE BEARBEITUNGSANLAGE**
MODULAR SYSTEM FOR HOLDING OPERATING MODULES OF A PROCESSING UNIT AND PROCESSING INSTALLATION
SYSTÈME MODULAIRE POUR LE SUPPORT DE MODULES D'USINAGE D'UNE INSTALLATION D'USINAGE ET INSTALLATION D'USINAGE

(30) Priorität: 05.02.2013 DE 102013201817; 15.04.2013 DE 202013003528 U
(43) Veröffentlichungstag der Anmeldung: 06.08.2014
(73) Patentinhaber: Otto Bihler Handels-Beteiligungs-GmbH, 87642 Halblech (DE)
(72) Erfinder: Maldoner, Paul, 87669 Rieden (DE); Kuck, Roland, 87629 Füssen (DE); Köpf, Johann, 87642 Halblech (DE)
(74) Vertreter: Weickmann & Weickmann PartmbB

(56) Entgegenhaltungen:
- WO-A1-2010/126405
- WO-A1-2012/042029
- DE-A1-102007 044 060

## Beschreibung

Die Erfindung betrifft ein Modulsystem zum Aufbau einer Halterungsvorrichtung zur Halterung von Bearbeitungsmodulen einer Bearbeitungsanlage, umfassend wenigstens ein zumindest näherungsweise prismatisches, vorzugsweise quaderförmiges Halterungsmodul zur Anbringung von Bearbeitungsmodulen, wobei das Halterungsmodul an wenigstens einer Prismenseitenfläche ein vorbestimmtes Raster von präparierten Befestigungsstellen für Bearbeitungsmodule aufweist.

Weiter betrifft die Erfindung eine Bearbeitungsanlage mit einem solchen Modulsystem.

Bearbeitungsanlagen der hier betrachteten Art werden zur Massenfertigungund/oder Montage von Bauteilen und Baugruppen eingesetzt, wobei die Fertigungs- und/oder Montagevorgänge z.B. Schritte des Materialzuführens, des Materialtrennens, des Materialumformens, des Bohrens, des Gewindeformens, des Verbindens durch Schweißen, Löten, Kleben, Verschrauben oder Nieten, des Bedruckens usw. umfassen können.

Beispiele für Produkte, die üblicherweise mit solchen Bearbeitungsanlagen hergestellt werden, sind Schlauchschellen, Fenster- und Türbeschläge, Gürtelschnallen, Möbelbeschläge, Schlossteile, elektrische Kontaktverbindungselemente, wie Stecker und Steckdosen, Zündkerzen usw. Bei der Herstellung solcher Massenteile können unterschiedliche Materialien zum Einsatz kommen, insbesondere Metalle und Kunststoffe.

Entsprechend der großen Vielfalt an unterschiedlichen Formen, Abmessungen und Zusammensetzungen der mit solchen Bearbeitungsanlagen herzustellenden Produkte sind Bearbeitungsanlagen gefragt, die an die Anforderungen zur Herstellung eines jeweiligen spezifischen Produktes leicht individuell anpassbar sind.

So sind unter anderem Bearbeitungsanlagen bekannt, die Fertigungsund/oder Montagemodule aufweisen, die numerisch steuerbar sind, also computergesteuerte und somit programmierbare NC-Bearbeitungsmodule. Eine gewisse Flexibilität beim Einrichten einer Bearbeitungsanlage ergibt sich dadurch, dass die NC-Bearbeitungsmodule ihrer spezifischen Aufgabe entsprechend programmiert werden können. Auch ist es bekannt, solche NC-Module, etwa Biegeschlitten oder dgl. an einem gemeinsamen Maschinenrahmen etwa in Form einer massiven Montageplatte vorzusehen, welche ein Lochraster für die Anmontage solcher Module an betreffenden Befestigungsstellen aufweist.

Bekannt sind außerdem Produktionsmaschinen, bei denen auf mehreren Stationen Stanz- und/oder Biegeoperationen durchgeführt werden, wie etwa die kommerziell erhältliche Maschine der Otto Bihler Maschinenfabrik, Halblech, Typ BM 306. Mit dieser Maschine kann aus einem langgestreckten Rohmaterial ein Erzeugnis geformt und vereinzelt werden.

Eine Bearbeitungsanlage mit einem Modulsystem aus Halterungmodulen ist z.B. aus der WO 2012/042029 A1 und aus der DE 10 2007 044 060 A bekannt.

Der vorliegenden Erfindung liegt die Aufgabe zugrunde, die Flexibilität einer solchen Bearbeitungsanlage im Hinblick auf die Anpassbarkeit an produktspezifische Bearbeitungserfordernisse der herzustellenden Teile zu vergrößern.

Zur Lösung dieser Aufgabe wird erfindungsgemäß ein Modulsystem mit den Merkmalen des Anspruchs 1 vorgeschlagen, nämlich ein Modulsystem zum Aufbau einer Halterungsvorrichtung zur Halterung von Bearbeitungsmodulen einer Bearbeitungsanlage, umfassend wenigstens ein zumindest näherungsweise prismatisches, vorzugsweise quaderförmiges Halterungsmodul zur Anbringung von Bearbeitungsmodulen, wobei das Halterungsmodul an wenigstens einer Prismenseitenfläche ein vorbestimmtes Raster von präparierten Befestigungsstellen für Bearbeitungsmodule aufweist. Das Modulsystem ist gekennzeichnet durch wenigstens einen an dem Halterungsmodul zu befestigenden Montageadapter mit einer Montageplatte zur Anbringung weiterer Bearbeitungsmodule an dem Halterungsmodul, wobei der Montageadapter zumindest an der Montageplatte ein weiteres vorbestimmtes Raster an präparierten Befestigungsstellen aufweist und so an dem Halterungsmodul befestigbar ist, dass die Montageplatte parallel zu einer Prismenseitenfläche des Halterungsmoduls diese zumindest teilweise außen überdeckend und über deren Prismenseitenflächenrand hinweg überragend ausgerichtet ist.

Ein besonderer Vorteil der vorgeschlagenen Lösung ist, dass ein Bearbeitungsmodul von dem Halterungsmodul entfernt angeordnet werden kann, indem es an dem sich von dem Halterungsmodul weg erstreckenden Montageadapter befestigt wird. Insbesondere sieht ein solcher Montageadapter verschiedene Positionen vor, an denen ein Bearbeitungsmodul daran befestigt werden kann. Eine Montageplatte, die von dem Montageadapter umfasst ist, bietet den Vorteil, dass ein daran befestigtes Bearbeitungsmodul oder ein Teil davon Kräfte aus der Bearbeitung über diese Montageplatte in einen anderen Teil davon bzw. in ein anderes Bearbeitungsmodul leiten kann. Die Platte ist hierzu vorzugsweise ausreichend dickwandig ausgeführt. Dadurch, dass Bearbeitungmodule oder Teile davon vorzugsweise wenigstens hauptsächlich an der Platte befestigt sind, läuft der Kraftfluss nur über die Platte, was einen kurzen Weg für den Kraftfluss bewirkt und vermeidet, Verbindungsstellen einer alternativ denkbaren Konstruktion aus mehreren Aufnahmeelementen mit entsprechend hoher Festigkeit auszuführen. Durch die Optimierung des Kraftflusses ergibt sich eine wenig materialintensive Lösung zur Anbringung von Bearbeitungsmodulen. Durch den Motangeadapter ergibt sich die Möglichkeit, den Raum um Halterungsmodule herum besser auszunutzen. Der Montageadapter kann im einfachsten Fall eine Montageplatte mit einem Raster von Befestigungsstellen sein. Vorzugsweise umfasst er jedoch zusätzlich wenigstens eine Stützvorrichtung, wie im Folgenden noch erläutert.

Halterungsmodule können also mit einem Montageadapter zu einem Modulsystem kombiniert werden, welches die Anbringung verschiedener Fertigungs- und/oder Montagekomponenten in verschiedensten Positionen ermöglicht, so dass die Anpassung einer mit einem solchen Modulsystem ausgestatteten Bearbeitungsanlage an spezifische Bearbeitungsvorgänge flexibel und einfach möglich ist, wobei dies insbesondere im Zusammenhang mit der Verwendung individuell steuerbarer Fertigungs- und/oder Montagekomponenten, wie etwa NC-Bearbeitungsmodulen, zutrifft.

Vorzugsweise sind die Halterungmodule so ausgestaltet, wie es in der WO 2012/042029 A1 erläutert ist. Hinsichtlich der Ausgestaltung der Halterungsmodule wird somit die WO 2012/042029 A1 inhaltlich in den Offenbarungsgehalt der vorliegenden Anmeldung einbezogen.

Derartige Halterungsmodule haben eine annähernd quaderförmige Gestalt, so dass mehrere solcher identischer Halterungsmodule leicht in unterschiedlichen Standardanordungen zu einem modularen Halterungssystem zusammengesetzt werden können. Beispiele für solche Standardanordungen sind die Reihenanordnung, die 90°-Winkelanordnung, die T-Anordung, die U-Anordnung, die Rechteck-Anordnung. Grundsätzlich können Halterungsmodule nach der Erfindung auch so gestaltet sein, dass sie z.B. orthogonal zueinander in drei Raumrichtungen zu einem räumlich verzweigten Halterungssystem aneinander gefügt und kombiniert werden können.

Die Flexibilität eines solchen Modulsystems kann noch vergrößert werden, wenn entsprechend einer Ausführungsform des Halterungsmoduls mehrere Prismenseitenflächen, also vorzugsweise mehrere Quaderseitenflächen, ein vorbestimmtes Befestigungsraster von präparierten Befestigungsstellen aufweist, wobei es sich dabei z.B. um Befestigungslöcher oder/und Befestigungsstifte oder/und Befestigungshaken oder/und Spannelemente oder dgl., für den Anbau der Komponenten handelt. Vorzugsweise sind die Befestigungsraster an allen damit ausgestatteten Prismenseitenflächen des Halterungsmoduls identisch. Gemäß einer weiterhin bevorzugten Variante der Erfindung entspricht die Länge der Prismenseitenkanten einem ganzzahligen Vielfachen der Länge der Prismengrundkanten des Halterungsmoduls. Insgesamt ist es vorteilhaft, wenn die Prismenkanten einem jeweiligen ganzzahligen Vielfachen eines kleinsten Rastermaßes d des Befestigungsrasters entsprechen.

Darüber hinaus wird gemäß einer bevorzugten Weiterbildung der Erfindung vorgeschlagen, dass das Halterungsmodul so gestaltet ist, dass es mit wenigstens einem identischen Halterungsmodul zu einem Modulsystem zusammenfügbar ist, wobei ein Befestigungsraster von Befestigungsstellen des Halterungsmoduls systematisch an ein Befestigungsraster von Befestigungsstellen des identischen anderen Halterungsmoduls unter Aufrechterhaltung eines bestimmten Befestigungsrastermaßes am Übergang zwischen den Halterungsmodulen anschließbar ist. Eine solche Lösung erlaubt das Anbringen von Fertigungs- und/oder Montagekomponenten über die Übergangsstelle zwischen den Halterungsmodulen hinweg an Befestigungsstellen beider Halterungsmodule ohne Aufgabe der Orientierung an einem vorbestimmten Rastermaß bzw. Rasterbild.

Gemäß einer weiteren bevorzugten Ausführungsform des Halterungsmoduls weist das Befestigungsraster ein Befestigungsloch, bevorzugt eine sich parallel zu einer Prismenseitenkante des Halterungsmoduls erstreckende Reihe von Befestigungslöchern, vorzugsweise mit einem vorbestimmtem Lochabstand, auf. In einer Variante haben die den Prismengrundkanten des Halterungsmoduls nächstliegenden Befestigungslöcher einen halben Lochabstand zu den betreffenden Prismengrundkanten. Zusätzlich oder alternativ entspricht vorzugsweise auch der Abstand der randständigen Befestigungslochreihen von der jeweiligen nächstbenachbarten Prismenseitenkante dem halben Lochabstand. Zwei identische Halterungsmodule dieser Bauart können so zu einem modularen Halterungssystem aneinander gefügt werden, dass der Rastermaß-Lochabstand über die Verbindungsstelle hinweg aufrecht erhalten bleibt. Eine Weiterbildung der letztgenannten Ausbildungsform des Halterungsmoduls ist dadurch gekennzeichnet, dass das Befestigungsraster eine, bevorzugt mindestens vier sich parallel zu einer Prismenseitenkante des Halterungsmoduls erstreckende Reihen von Befestigungslöchern aufweist. Vorzugsweise verlaufen diese Befestigungslochreihen symmetrisch in Bezug zu einer zu den Prismenseitenkanten parallelen Ebene, die die mit den Befestigungslochreihen versehene Prismenseitenfläche mittig teilt und orthogonal dazu verläuft. Vorzugsweise entsprechen die Abstände zwischen den Lochreihen einem ganzzahligen Vielfachen des Rastermaßes und somit des Lochabstandes zwischen zwei Löchern einer jeweiligen Reihe. Ferner ist es bevorzugt, dass die Lochreihen identische Lochabstände und Lochdurchmesser aufweisen. Ein solches Befestigungslochbild definiert ein Befestigungsstellenraster, welches leicht an standardisierte Befestigungsmaße anzubringender Fertigungs- und/oder Montagekomponenten anpassbar ist.

Eine große Vielfalt an Anbaumöglichkeiten erlaubt eine Ausführungsform des Halterungsmoduls, gemäß welcher alle Prismenseitenflächen des Prismenmantels, also im Falle des Quaders alle vier aneinander angrenzenden Quaderseitenflächen des Halterungsmoduls mit identischen Befestigungsrastern präpariert sind, wobei ein Befestigungsraster ggf. auch zur Montage des Halterungsmoduls an dem Basisrahmen der Bearbeitungsanlage verwendet werden kann und somit die betreffenden Mittel zur Fixierung des Halterungsmoduls am Basisrahmen bereitstellt.

Gemäß einer in Praxisversuchen bewährten Ausführungsform sind drei aneinander grenzende Quaderseitenflächen des in diesem Fall quaderförmigen Halterungsmoduls mit identischen Befestigungsrastern präpariert, wobei die verbleibende Quaderseitenfläche die Mittel zur Fixierung des Halterungsmoduls an dem Basisrahmen der Bearbeitungsanlage aufweist. Eine demgegenüber abgewandelte Ausführungsform weist an mehreren Quaderseitenflächen Befestigungsraster auf, von denen jedoch wenigstens zwei unterschiedlich sind.

Vorzugsweise handelt es sich bei dem Halterungsmodul um ein einstückiges hohles Metallgussteil. In anderen Ausführungsformen kann das Halterungsmodul z.B. aus Plattenelementen gebildet sein. Hierbei handelt es sich z.B. um miteinander verschweißte Metallplattenelemente, etwa aus Stahl.

Eine Weiterbildung der Erfindung sieht vor, dass das ein Hohlraum enthaltende Halterungsmodul in den Prismenseitenwänden ein oder mehrere Durchgriffslöcher, insbesondere eine sich parallel zu den Prismenseitenkanten erstreckende mittige Lochreihe aus Durchgriffslöchern aufweist. Diese Durchgriffslöcher sollten groß genug sein, dass ein Monteur durch ein betreffendes Durchgriffsloch hindurch in das Innere des Halterungsmoduls eingreifen kann.

Ferner dienen die Durchgriffslöcher zur Durchführung von Leitungen, etwa elektrischen Leitungen, Datenkabeln, Schmiermittelleitungen, Kühlmittelleitungen, Pneumatikleitungen und dgl., die an Fertigungs- und/oder Montagekomponenten außen an dem Halterungsmodul angeschlossen sind und im weiteren Verlauf innerhalb des Hohlraums des Halterungsmoduls geschützt verlegt sind. Das Durchgriffsloch oder die Durchgriffslochreihen sind vorzugsweise in einer nach außen offenen Nut vorgesehen, die sich parallel zu den Prismenseitenkanten in der Mitte einer betreffenden Prismenseitenfläche erstreckt. Diese Nut kann bei Bedarf eine komplementäre Blendenleiste aufnehmen, welche das oder die Durchgriffslöcher nach außen verschließt.

In einer Ausführungsform des erfindungsgemäßen Modulsystems ist das Raster des Montageadapters an der Montageplatte angeordnet. In einer bevorzugten Variante bildet die Montageplatte den Hauptteil des Montageadapters und ist vornehmlich für das Anbringen von Bearbeitungsmodulen vorgesehen. In einer weiteren Ausführungsform des Modulsystems passen das vorbestimmte Raster des Montageadapters und das Raster des Halterungsmoduls mit den jeweiligen Befestigungsstellen derart zusammen, dass der Montageadapter an den jeweiligen Befestigungsstellen an dem Halterungsmodul befestigbar ist, ggf. in verschiedenen wählbaren Positionen und/oder Orientierungen. Dazu müssen nicht alle Elemente der jeweiligen Raster übereinstimmen, sondern nur eine zur entsprechenden Befestigung ausreichende Anzahl. Die anderen Befestigungsstellen können zur Aufnahme eines oder mehrerer Bearbeitungsmodule, ggf. in verschiedenen wählbaren Positionen und/oder Orientierungen dienen.

In einer weiteren Ausführungsform weist die Montageplatte wenigstens einen Durchbruch auf, wobei der Durchbruch insbesondere im Wesentlichen rechteckig oder kreisrund ist. Ein solcher Durchbruch kann zum Durchstecken von Teilen von Bearbeitungsmodulen durch die Montageplatte dienen, wobei in einer Variante ein solches Durchstecken die Position des Bearbeitungsmoduls auf der Montageplatte festlegen und/oder Kräfte in diese übertragen kann. In einer anderen Variante dient ein Durchbruch durch die Montageplatte zur Durchführung von Versorgungsleitungen einer Bearbeitungsstation. In noch einer Variante ist ein Durchbruch dazu vorgesehen, einen Kranhaken oder dergleichen in die Adapterplatte einzuhängen.

In dem erfindungsgemässen Modulsystem umfasst der Montageadapter eine Stützeinrichtung zur Abstützung der Adapterplatte an dem Halterungsmodul. Eine solche Stützeinrichtung unterstützt die Befestigung der Adapterplatte an dem Halterungsmodul und überträgt bevorzugt zusätzliche Kräfte und/oder Drehmomente in das Halterungmodul. Außerdem kann die Stützeinrichtung, die bevorzugt an der Adapterplatte befestigt ist, der Vorpositionierung der Adapterplatte auf dem Halterungsmodul dienen, bevor diese beiden Teile miteinander verbunden werden. Die Stützeinrichtung ist mit einer Auflagefläche zur Auflage auf dem Halterungsmodul und mit einer Anlagefläche zur Anlage an der Montageplatte versehen. Besonders bevorzugt ist die Anlagefläche rechtwinklig zu der Auflagefläche angeordnet. Dies ist insbesondere dann vorteilhaft, wenn eine Außenseite des prismatischen Halterungsmoduls, an der die Adapterplatte mittelbar oder unmittelbar parallel anliegen soll, zu einer weiteren Außenfläche des prismatischen Halterungsmoduls, an der die Auflagefläche der Stützeinrichtung aufliegen soll, in einem rechten Winkel steht. Rechte Winkel sind besonders einfach zu fertigen und können bewirken, dass bei Ausrichtung eines Schenkels des rechten Winkels in Richtung der Schwerkraft nur der dazu rechtwinklig angeordnete Schenkel mit Schwerkraft beaufschlagt ist. Dies bedeutet in Bezug auf die Stützeinrichtung, dass diese die Schwerkraft auf die Verbindungsstelle zwischen dem Halterungsmodul und dem Montageadapter übertragen kann.

In einer Ausführungsform kann die Stützeinrichtung mit Befestigungsmitteln an ihrer Auflagefläche an Befestigungsstellen des Rasters an einer Prismenoberseite des Halterungsmoduls befestigt sein. Dieses Raster passt dabei zu der Anordnung der Befestigungsmittel an der Stützeinrichtung. In einer weiteren Ausführungsform ist die Stützeinrichtung im Wesentlichen als Stützrahmen ausgeführt. Insbesondere kann die Stützeinrichtung als dreieckiger, innen offener Rahmen ausgebildet sein. Dadurch kann Gewicht bzw. Material eingespart werden. In einer weiteren Ausführungsform ist eine Hauptebene der Stützeinrichtung im Wesentlichen rechtwinklig zu der Montageplatte angeordnet. Vorzugsweise ist die Stützeinrichtung im Wesentlichen plattenförmig ausgestaltet, so dass in diesem Fall die Hauptebene die Plattenebene ist. Durch die rechtwinklige Anordnung der Halteeinrichtung zu der Montageplatte wird erreicht, dass diese maximal von der Montageplatte absteht und so eine optimale Drehmomentübertragung mit einem längstmöglichen Hebel bietet.

In einer weiteren Ausführungsform weist der Montageadapter mehrere Stützeinrichtungen auf. In einer Weiterbildung des Modulsystems sind die Stützeinrichtungen parallel zueinander angeordnet. Dies bringt mit sich, dass die Stützeinrichtungen gleichartig ausgeführt sein können und nutzt gleichmäßig die Außenoberfläche des Halterungsmoduls, auf dem sie aufliegen. Auf diese Weise wird eine lokale Überlastung des Halterungsmoduls vermieden. In einer weiteren Ausführungsform des Modulsystems weist die Montageplatte einen Durchbruch mit zwei einander in der Ebene der Montageplatte gegenüberliegenden Seiten des Durchbruchs auf. In der Nähe von diesen gegenüberliegenden Seiten ist in dieser Ausführungsform jeweils eine Stützeinrichtung angeordnet. Dies ist insbesondere vorteilhaft, wenn der Durchbruch dazu dient, Kräfte in die Montageplatte einzuleiten. Diese werden dann über eine kurze Strecke durch die Montageplatte in die Stützeinrichtung weitergeleitet, und von dort in das Halterungsmodul übertragen. Auf diese Weise kann die Ableitung von Gewichtskräften optimiert werden, was mit einer minimalen Verformung der Adapterplatte und einer entsprechend geringen Verlagerung eines Bearbeitungsmoduls einhergeht. In einer weiteren Ausführungsform ist wenigstens eine Stützeinrichtung im Bereich eines vorgesehenen Befestigungsorts eines Bearbeitungsmoduls angeordnet. Dies kann insbesondere ein Stanzmodul, ein Biegemodul oder eine Kombination daraus sein oder eine Einzugsstation für langgestrecktes Rohmaterial. Besonders bevorzugt ist die Stützeinrichtung auf einer Seite der Montageplatte angeordnet, die der Seite entgegengesetzt ist, an der das Bearbeitungsmodul aufgenommen ist. Auf diese Weise kollidieren das Bearbeitungsmodul und die Stützeinrichtung nicht, wobei dennoch eine sehr effektive Ableitung von Kräften aus dem Bearbeitungsmodul gewährleistet ist. Der in einer vorangehend beschriebenen Ausführungsform erwähnte Durchbruch kann ebenfalls in diesem Bereich des Befestigungsorts vorgesehen sein.

In einer weiteren Ausführungsform des Modulsystems erstrecken sich die Befestigungsstellen an dem Montageadapter zumindest über große Teile einer Hauptfläche der Montageplatte. Dies bietet eine große Flexibilität bezüglich der Anbringung von Bearbeitungsmodulen. In einer weiteren Ausführungsform sind die Befestigungsstellen an der Montageplatte als Gewindebohrungen, Passbohrungen, Sackbohrungen, Durchgangsbohrungen, ein oder mehrere Absätze, Einfräsungen und/oder Nuten ausgebildet. Derartige Befestigungsmittel sind geeignet, um ein Bearbeitungsmodul an der Montageplatte zu befestigen. Insbesondere kann sich ein Bearbeitungsmodul an Passbohrungen, Einfräsungen und/oder Nuten gewichtsmäßig und formschlüssig an der Montageplatte abstützen. Die Befestigungsstellen können in einer Variante auf einer Seite der Montageplatte, und in einer weiteren Variante auf beiden Seiten der Montageplatte angeordnet sein. Die Raster auf den beiden Seiten der Montageplatte können voneinander abweichen, um verschiedene Bearbeitungsmodule befestigen zu können oder unterschiedliche Positionen erreichen zu können. Die Montageplatte kann dann je nach den Erfordernissen auf der einen oder der anderen Seite an dem Halterungsmodul befestigt werden.

In einer weiteren Ausführungsform des Modulsystems beträgt das Verhältnis der Dicke der Montageplatte zu einer Hauptabmessung in der Ebene der Montageplatte zwischen 1:15 und 1:60, bevorzugt etwa 1: 30. Die Ebene der Montageplatte ist die Ebene, in der der Großteil der Befestigungsstellen angeordnet sind. Eine Hauptabmessung ist typischerweise die größte Abmessung über die Montageplatte in verschiedene denkbare Richtungen.

In einer weiteren Ausführungsform des Modulsystems ist eine Montageplatte im montierten Zustand von dem Halterungsmodul durch eine Abstandhalteeinrichtung beabstandet angeordnet. Bevorzugt ist die Abstandhalteeinrichtung als eine oder mehrere Leisten, Platten und/oder Rahmen ausgebildet. Diese Elemente können flächig an einer Seite der Montageplatte anliegen, die zu dem Halterungsmodul gerichtet ist. Bevorzugt ist die Abstandhalteeinrichtung mit der Montageplatte verschraubt. Besonders bevorzugt umfasst die Abstandhalteeinrichtung zwei im Betriebszustand übereinander angeordnete Platten. Die gemeinsame Gesamtabmessung der beiden Platten in vertikaler Richtung entspricht vorzugsweise im Wesentlichen der vertikalen Höhe des Halterungsmoduls. In einer Weiterbildung weist die Abstandhalteeinrichtung eine Aussparung auf, derart, dass sie ein Durchgangsloch im Halterungsmodul, das der Montagadapter, insbesondere die Montageplatte, überdeckt, nicht vollständig verschließt. Auf diese Weise können Kabel aus dem Durchgangsloch herausgeführt werden, auch wenn davor der Montageadapter moniert ist.

In einer weiteren Ausführungsform des Modulsystems kann ein anderes Raster von präparierten Befestigungsstellen an der Montageplatte vorgesehen sein als an dem Halterungsmodul vorgesehen ist. Auf diese Weise können Bearbeitungsmodule, die aufgrund ihres Befestigungsrasters nicht an einem Halterungsmodul befestigbar sind, an dem Montageadapter befestigt werden. Zusätzlich ergibt sich eine größere Freiheit bei der Wahl des Befestigungsorts. In einer weiteren Ausführungsform des Modulsystems weist der Montageadapter, insbesondere die Montageplatte, zwei verschiedene Raster an Befestigungsstellen auf. Dabei können sich die Rastermuster, Rasterabstände und/oder die Positionierung der Raster unterscheiden. Auf diese Weise können Bearbeitungsmodule mit unterschiedlichem eigenem Befestigungsraster an dem Montageadapter befestigt werden und/oder es ergibt sich eine größere Auswahlmöglichkeit für den Befestigungsort. In einer weiteren Ausführungsform durchsetzen sich zwei Raster in einem Bereich des Montageadapters gegenseitig. Dies bedeutet, dass Befestigungsstellen des einen Rasters in einem Bereich liegen, der auch von dem anderen Raste abgedeckt wird. Der Montageadapter, und in diesem insbesondere die Montageplatte, werden so optimal ausgenutzt.

In einer weiteren Ausführungsform des Modulsystems überspannt der Montageadapter, und an diesem insbesondere die Montageplatte, die gesamte Prismenseitenfläche des Halterungsmoduls in vertikaler Richtung. Vorzugsweise ist dabei der Montageadapter, insbesondere die Montageplatte, in einem oberen und einem unteren Bereich der Prismenseitenfläche an dieser befestigt, bevorzugt verschraubt. Wenn die gesamte Höhe der Prisenseitenfläche überdeckt ist, und der Montageadapter in einem oberen und unteren Bereich der Prismenseitenfläche verschraubt ist, überträgt die Verbindung zwischen dem Halterungsmodul und dem Montageadapter optimal Drehmomente. Solche Drehmomente sind durch den Überhang von Bearbeitungsmodulen über die Montageplatte hinaus und aufgrund der Gewichtskraft von den Bearbeitungsmodulen immer vorhanden. Eine gute Drehmomentübertragung mit entsprechender Steifigkeit der Verbindung bewirkt eine geringe Verformung der Übertragungsstelle und somit eine gute örtliche Konstanz der Position des Bearbeitungsmoduls.

In einer weiteren Ausführungsform des Modulsystems fluchten Positionen von präparierten Befestigungsstellen eines Rasters auf der Prismenoberseite des Halterungsmoduls mit Positionen von präparierten Befestigungsstellen eines Rasters auf der Prismenseitenfläche des Halterungsmoduls in einer Längsrichtung des Halterungsmoduls. Auf diese Weise kommen bei Befestigung des Montageadapters mittels dessen Raster an dem Raster des Halterungsmoduls die Raster von dem Montageadapter und dem Halterungsmodul in Längsrichtung des Halterungsmoduls in dieselben Positionen. Dies ermöglicht wiederum, eine Stützeinrichtung in derselben Fluchtung an Befestigungsstellen des Halterungsmoduls und der Adapterplatte zu befestigen. Die Stützeinrichtung muss somit keinen Versatz der Befestigungsstellen in Längsrichtung des Halterungsmoduls ausgleichen.

In einer weiteren Ausführungsform des Modulsystems weist die Montageplatte einen vorspringenden Abschnitt für die Aufnahme einer Einzugsstation auf. In diesem Abschnitt sind vorzugsweise eine oder mehrere Nuten und/oder Bohrungen, insbesondere Gewindebohrungen angeordnet, die zur Befestigung der Einzugsstation dienen. Die Anordnung der Montageplatte an dem vorspringenden Abschnitt und somit an einer exponierten Position bewirkt, dass die Einzugsstation ganz an einem Ende der Bearbeitungsanlage anordenbar ist, wodurch eine besonders gute Zugänglichkeit für die Zuführung von zum Beispiel quasi endlosem Bandmaterial von einem Coil außerhalb der Bearbeitungsanlage ermöglicht. Der vorspringende Abschnitt weist daher bevorzugt in Richtung eines Endes der Bearbeitungsanlage oder ragt über dieses hinaus.

In allen Ausführungsformen des Modulsystems kann die Montageplatte auch balkenförmig ausgeführt sein und bietet dann hauptsächlich eine Wahlmöglichkeit für den Befestigungsort eines Bearbeitungsmoduls in vorzugsweise vertikaler Richtung.

Gegenstand der Erfindung ist auch eine Bearbeitungsanlage mit einem Halterungssystem aus wenigstens einem Modulsystem nach der Erfindung, wobei die Bearbeitungsanlage einen Basisrahmen umfasst, an dem das Halterungsmodul in vorbestimmter Ausrichtung fixiert ist. Ferner weist die Bearbeitungsanlage Bearbeitungsmodule darstellende Fertigungs- und/oder Montagekomponenten auf, die an präparierten Befestigungsstellen des Halterungsmoduls und/oder dem Montageadapter in vorbestimmter Anordnung betriebsbereit montiert sind. Die Fertigungs- und/oder Montagekomponenten sind dazu eingerichtet, der betreffenden Fertigungs- und/oder Montageaufgabe entsprechende Bearbeitungsvorgänge durchzuführen. Außerdem weist die Bearbeitungsanlage einen Montageadapter auf, der mit einem Halterungsmodul verbunden ist und ein oder mehrere Bearbeitungsmodule trägt oder tragen kann. Vorzugsweise umfasst die Bearbeitungsanlage mehrere zu einem Halterungssystem aneinander gefügte Halterungsmodule.

Die Bearbeitungsmodule sind vorzugsweise Fertigungs- und/oder Montagekomponenten, z.B. NC-Fertigungs- und Montagemodule, die individuell programmierbar oder von einer Steuereinrichtung steuerbar sind.

Vorzugsweise umfassen die Fertigungs- und/oder Montagekomponenten Module aus der folgenden Gruppe: Schweißmodul, Gewindeformungsmodul, Schraubmodul, Zuführmodul, Einzugsmodul, Pick- & Place-Modul, Bearbeitungslaser, Presse, Kaltumformungsmodul, insbesondere Biegemodul oder Stanzmodul, Isoliermodul, Lötmodul, Klebemodul, Kunststoffspritzmodul, Beschriftungsmodul, Messmodul, Kameramodul, Kontrollmodul.

Gemäß einer Weiterbildung der Bearbeitungsanlage nach der Erfindung mit mehreren Halterungsmodulen sind sämtliche Halterungsmodule gleich ausgebildet. Eine alternative Variante sieht jedoch vor, dass Halterungsmodule unterschiedlicher, aber aufeinander abgestimmter Größen zusammen mit dem Montageadapter ein modulares Halterungssystem bilden. Die Größenabstimmung kann z.B. so sein, dass Halterungsmodule sich nur in ihrer Prismenseitenkantenlänge unterscheiden, wobei die Länge eines größeren Moduls einem ganzzahligen Vielfachen der Länge eines kleinsten Grundmoduls entspricht.

Ausführungsbeispiele der Erfindung werden unter Bezugnahme auf die Figuren näher erläutert.
- Fig. 1: zeigt in einer perspektivischen Darstellung ein Halterungsmodul auf einem Basisrahmen einer im Übrigen nicht dargestellten Bearbeitungsanlage;
- Fig. 2: zeigt ein modulares Halterungssystem aus zwei in einer T-Anordnung aneinander gefügten Halterungsmodulen der in Fig. 1 gezeigten Bauweise auf einem betreffenden Basisrahmen einer im Übrigen nicht dargestellten Bearbeitungsanlage;
- Fig. 3: zeigt zwei Halterungsmodule der in Fig. 1 gezeigten Bauart in einer Über-Eck-Winkelanordnung auf einem betreffenden Basisrahmen einer im Übrigen nicht dargestellten Bearbeitungsanlage;
- Fig. 4: zeigt eine Reihenanordnung aus drei zu einem modularen Halterungssystem aneinander angefügten Halterungsmodulen der in Fig. 1 gezeigten Bauart auf einem Basisrahmen einer im Übrigen nicht dargestellten Bearbeitungsanlage.
- Fig. 5: zeigt eine aufrecht positionierte Rechteckanordnung aus vier zu einem modularen Halterungssystem aneinander angefügten Halterungsmodulen der in Fig. 1 gezeigten Bauart auf einem Basisrahmen einer im Übrigen nicht dargestellten Bearbeitungsanlage.
- Fig. 6 und Fig. 7: zeigen eine Bearbeitungsanlage mit einem für das erfindungsgemäße Modulsystem geeigneten Halterungsmodul in perspektivischer Darstellung aus zwei entgegengesetzten Blickrichtungen.
- Figur 8: zeigt einen Maschinenrahmen einer Bearbeitungsanlage mit mehreren für das erfindungsgemäße Modulsystem geeigneten Halterungsmodulen in einer perspektivischen Darstellung,
- Figur 9: zeigt den Maschinenrahmen aus Figur 8 zusätzlich mit einer Fördereinrichtung und einen Montageadapter mit einer Montageplatte in einer perspektivischen Darstellung,
- Figur 10: zeigt den Maschinenrahmen aus Figur 2 zusätzlich mit mehreren Berarbeitungsmodulen in einer perspektivischen Darstellung,
- Figur 11: zeigt den Maschinenrahmen aus Figur 10 zusätzlich mit einem Vibrationsförderer und mit einer weiteren Station zur Bereitstellung von Komponenten zur Bearbeitung oder Montage in einer perspektivischen Darstellung, und
- Figur 12: zeigt einen Montageadapter mit einer Montageplatte für eine erfindungsgemäße Bearbeitungsanlage in einer perspektivischen Darstellung.

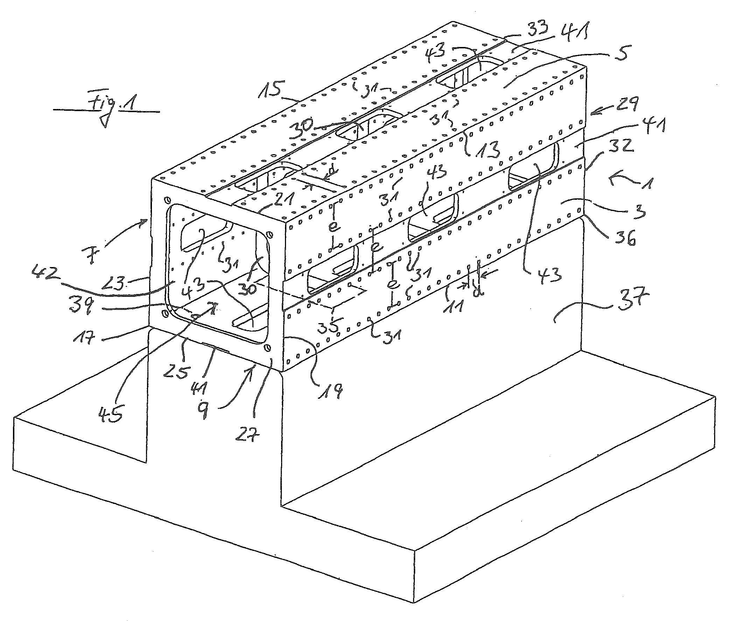

Das in Fig. 1 perspektivisch dargestellte Halterungsmodul 1 hat die Basisform eines Prismas, und zwar im Beispielsfall eines Quaders mit Prismenseitenflächen 3, 5, 7, 9, Prismenseitenkanten 11, 13, 15, 17 und Prismengrundkanten 19, 21, 23, 25, 32, 33, 34, 36 an den Grundseiten 27, 29.

Das kastenartige Halterungsmodul 1 ist im Beispielsfall ein einstückiges hohles Stahlgußteil mit den Quadermaßen 500 mm x 500 mm x 1500 mm. Die Prismenseitenkanten haben somit die dreifache Länge der Prismengrundkanten. In dem Hohlraum 45 des Halterungsmoduls 1 sind zu den Grundseiten 27, 29 parallele Aussteifungsrippen 30 vorgesehen.

In jeder der Prismenseitenflächen 3, 5, 7, 9 sind vier gleichartige Reihen von Befestigungslöchern 31 vorgesehen.

Die Befestigungslochreihen erstrecken sich parallel zu den Seitenkanten 11, 13, 15, 17 des Halterungsmoduls und weisen gleich große Löcher 31 mit gleich großem Lochabstand d entsprechend dem Rastermaß von im Beispielsfall 50 mm auf. Die Befestigungslochreihen der Quaderseitenfläche 3 verlaufen symmetrisch in Bezug auf eine zu den Prismenseitenkanten 11, 13 parallele Mittelebene 35. Die Befestigungsraster der Quaderseitenflächen 3, 5 und 7 sind identisch, so dass entsprechende Symmetrien der Lochreihen auch für die Seitenflächen 5 und 7 vorliegen. Vorzugsweise handelt es sich bei den Befestigungslöchern 31 um Löcher mit einem Durchmesser von z.B. 10-15 mm für die Aufnahme von Passhülsen, die zur zentrierten Aufnahme von Befestigungsschrauben für die Anbringung von als Bearbeitungsmodule ausgebildete Fertigungs- und/oder Montagekomponenten dienen. Die Befestigungslöcher können Gewinde aufweisen oder einfach für das Durchstecken von Schraubbolzen vorgesehen sein.

Der Abstand e zwischen den Lochreihen einer jeweiligen Quaderseitenfläche 3, 5, 7 entspricht einem ganzseitigen Vielfachen des Rastermaßes d. Im Beispielsfall ist e = 150 mm.

Die auf dem Basisrahmen 37 aufliegende Quaderseitenfläche 9 des Halterungsmoduls 1 weist nicht das Befestigungsraster der anderen Quaderseitenflächen 3, 5, 7 auf, sondern ein eigenes Raster von Befestigungslöchern 39, welches an ein komplementäres Befestigungsraster des Basisrahmens 37 angepasst ist. In einer alternativen Ausführungsform des Halterungsmoduls 1 könnte jedoch auch die Quaderseitenfläche 9 mit einem Befestigungsraster ausgestaltet sein, welches dem der anderen Quaderseitenflächen 3, 5, 7 entspricht.

Mittig und parallel zu den Seitenkanten 11, 13 erstreckt sich längs der Quaderseitenfläche 3 eine Außennut 41 in welcher drei Durchgriffslöcher 43 äquidistant vorgesehen sind. Solche Durchgriffslöcher 43 sind an entsprechenden Stellen ebenfalls in den anderen Quaderseitenflächen 5, 7 und 9 vorgesehen. Sie erlauben einen Zugriff auf den inneren Hohlraum 45 des Halterungsmoduls 1, d.h. sie sind so groß, dass ein Monteur mit der Hand durch die Durchgriffsöffnungen 43 hindurch greifen kann. Die Durchgriffsöffnungen 43 dienen auch zur Durchführung von Leitungen, die im übrigen auch teilweise längs der Nuten 41 verlegt sein können und üblicherweise an Fertigungs- und/oder Montagekomponenten angeschlossen sind.

Die Nuten 41 können bedarfsweise mit einer darin einzulegenden Blendenleiste ausgefüllt werden, um die Durchgriffslöcher 43 nach außen zu verschließen.

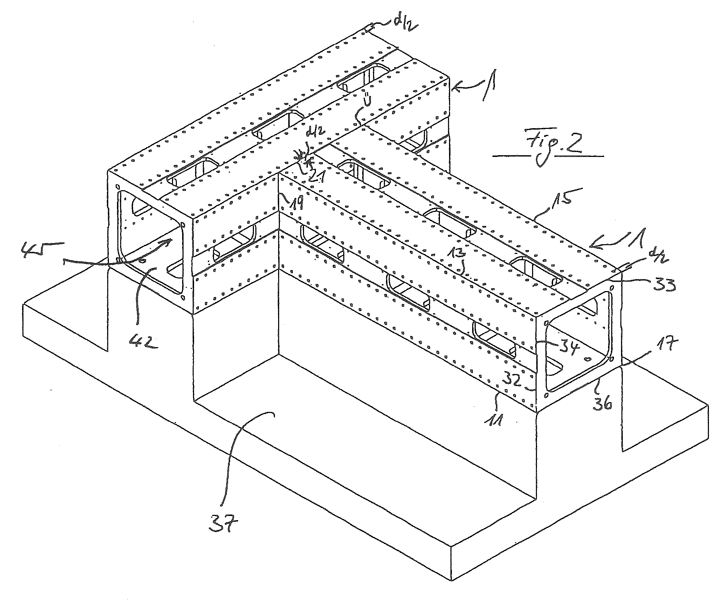

In Fig. 2 ist eine sogenannte T-Anordnung zweier identischer Halterungsmodule der in Fig. 1 gezeigten Art dargestellt. Diesbezüglich ist noch darauf hinzuweisen, dass die den Kanten 11, 13, 15 17, 19, 21, 23, 32, 33, 34, 36 des betreffenden Halterungsmoduls jeweils unmittelbar benachbarten Löcher zu der betreffenden Kante den halben Lochabstand d/2 haben, so dass das Rastermaß am Übergang Ü zwischen den beiden Halterungsblöcken fortgesetzt wird.

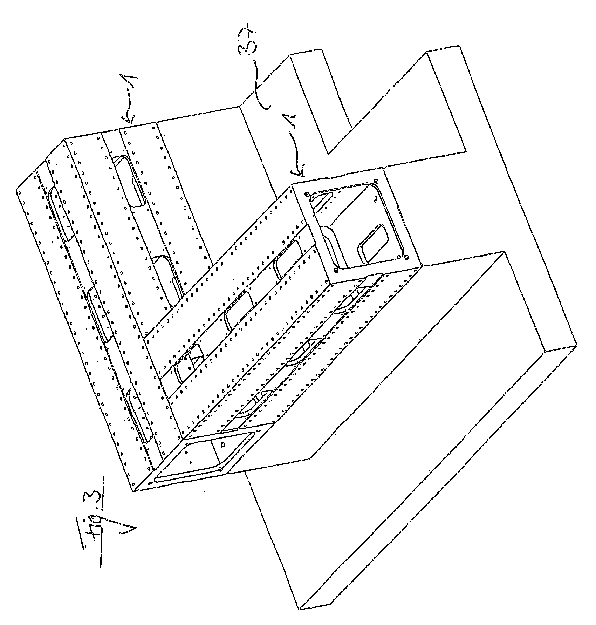

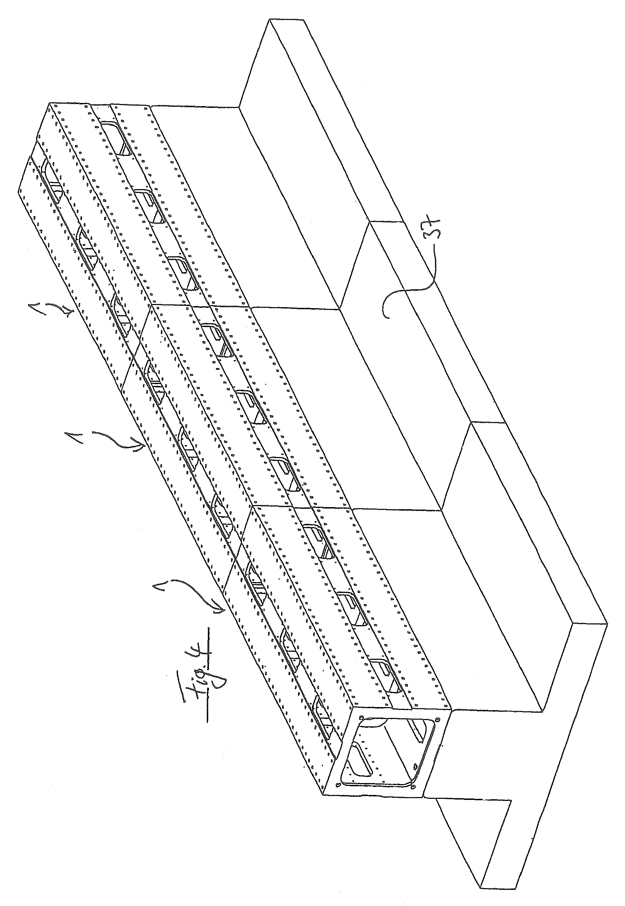

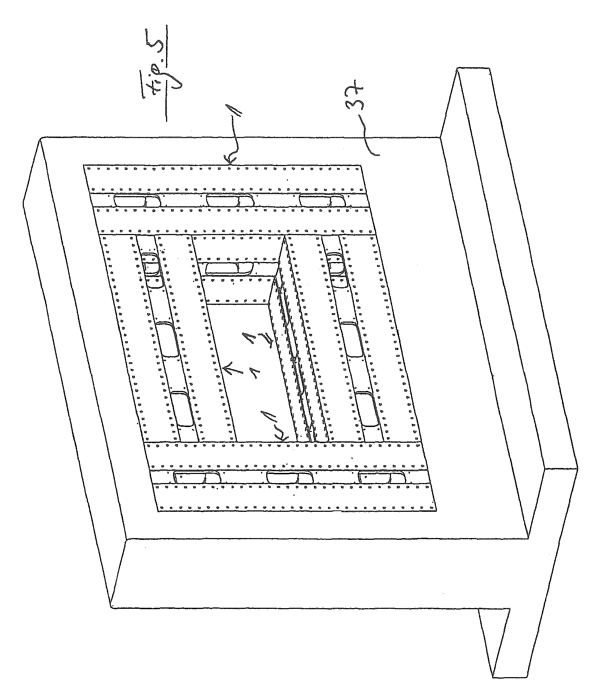

Dies gilt auch in der Über-Eck-Winkelanordnung zweier identischer Halterungsmodule gemäß Fig. 3 und für eine Reihenanordnung von z.B. drei identischen Halterungsmodulen gemäß Fig. 4. Weitere mögliche Kombinationen wären z.B. eine Z-Anordnung oder eine U-Anordnung oder eine □-nordnung. Eine □**-**Anordnung in vertikaler Aufstellung zeigt Fig. 5. Darin ist auch zu erkennen, dass Halterungsmodule 1 in aufrecht stehender Anordnung und in liegender Anordnung montiert sein können. Grundsätzlich wäre es auch möglich, das Halterungssystem orthogonal zu der von den Halterungsmodulen 1 aufgespannten Rechteckebene durch Anbau von weiteren Halterungsmodulen 1 quer dazu räumlich fortzusetzen. Durch Keiladapter oder dgl. könnten auch schräge Abzweigungen, also nicht rechtwinklige Abzweigungen, gebildet werden.

Die Figuren 2 - 5 lassen erkennen, dass Halterungsmodule 1 in flexibler Weise zu unterschiedlich gestalteten Halterungssystemen kombiniert werden können, um Fertigungs- und/oder Montagekomponenten als Bearbeitungsmodule für jeweils spezifische Fertigungs- und/oder Montageaufgaben anzuordnen.

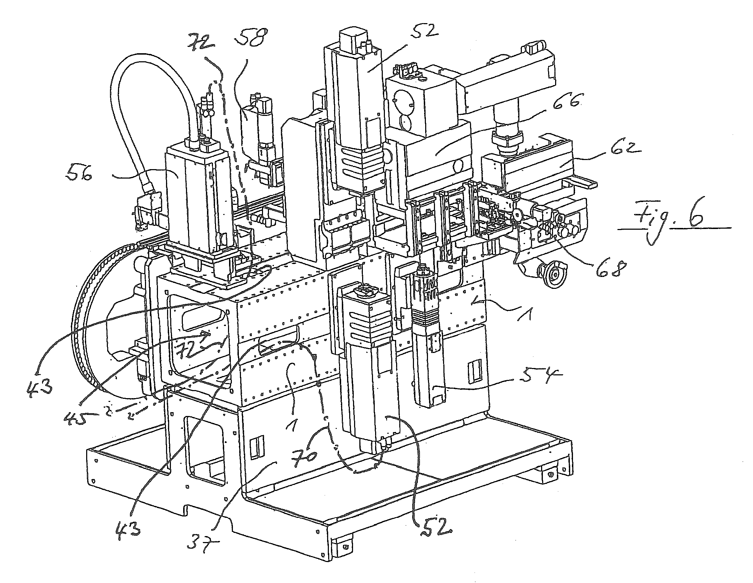

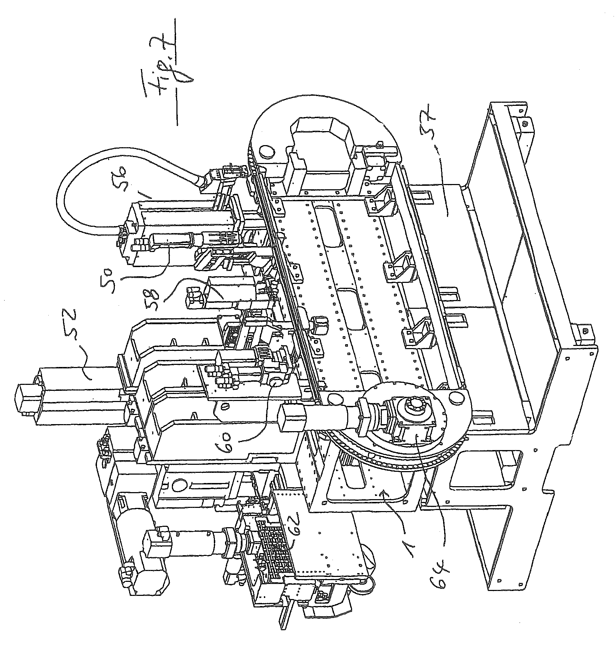

In den Figuren 6 und 7 ist eine Bearbeitungsanlage mit einem Halterungsmodul 1 perspektivisch mit Blick aus entgegengesetzten Richtungen dargestellt. Darin ist zu erkennen, dass verschiedene Fertigungs- und/oder Montagekomponenten in vorbestimmter Anordnung relativ zueinander an dem Halterungsmodul fixiert sind. Im Beispielsfall umfassen die Fertigungs- und/oder Montagekomponenten NC-Schlitten 50, 52, 54, ein NC-Pick- & Place-Modul 56, einen NC-Gewindeformer 58, einen NC-Schrauber 60, einen NC-Einzug 62, einen NC-Antrieb mit Transportband 64, eine NC-Presse 66 und einen NC-Antrieb mit Schweißgerät 68.

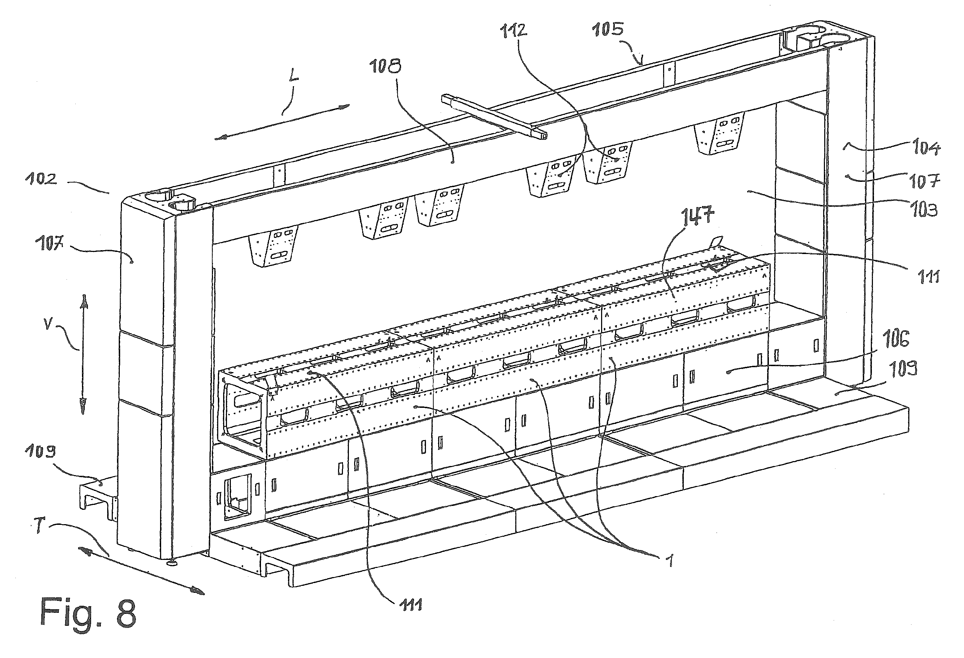

Figur 8 zeigt in einer perspektivischen Darstellung einen Maschinenrahmen 2 einer Bearbeitungsanlage. Der Maschinenrahmen 102 erstreckt sich im Wesentlichen in eine Längsrichtung L und in eine vertikale Richtung V. Im Inneren des Maschinenrahmens 102 befindet sich eine Durchtrittsöffnung 103, die sich von einer dem Betrachter zugewandten Rahmenaußenseite 104 zu einer vom Betrachter abgewandten, der Rahmenaußenseite 104 gegenüberliegenden Rahmenaußenseite 105 erstreckt. Der Maschinenrahmen 102 weist im Wesentlichen eine rechteckige Form auf, wobei das Rechteck ein unteres, horizontal angeordnetes Rahmensegment 106, zwei vertikal angeordnete Endpfeiler 107 und ein oben horizontal angeordnetes Leitungsführungssegment 108 umfasst. Das untere Rahmensegment 106, die beiden Endpfeiler 107 und das Leitungsführungssegment 108 fluchten vorzugsweise in der Ebene der Rahmenaußenseite 104 und/oder der Ebene der Rahmenaußenseite 105 miteinander. Die Rahmenaußenseite 104 und/oder die Rahmenaußenseite 105 sind vorzugsweise im Wesentlichen eben ausgebildet. Von dem unteren Rahmensegment 106 erstreckt sich in einer Tiefenrichtung T zu beiden Seiten des Maschinenrahmens 102 jeweils eine begehbare Arbeitsplattform 109, die vorzugsweise aus mehreren Segmenten zusammengesetzt ist. Vorzugsweise ist auch das untere Rahmensegment 106 aus mehreren Segmenten zusammengesetzt, die bevorzugt wenigstens teilweise die gleichen Abmessungen in Längsrichtung L wie die Segmente der Arbeitsplattform 109 haben. Eine Arbeitsplattform 109 erstreckt sich vorzugsweise über die gesamte Länge des unteren Rahmensegments 106, oder alternativ über die gesamte Länge des Maschinenrahmens 102. Die Arbeitsplattformen 109 sichern zusätzlich zu der Funktion, für Bediener einen erhöhten Zutritt zu der Bearbeitungsanlage zu bieten, den Maschinenrahmen 102 gegen Umfallen in Tiefenrichtung T. Auf der Oberseite des unteren Rahmensegmentes 106 sind drei Halterungsmodule 1 der vorstehend beschriebenen Art angeordnet. Insbesondere weisen die Halterungsmodule 1 eine Vielzahl von Durchgangsbohrungen und/oder Gewindebohrungen auf, an denen eine Fördereinrichtung und/oder Berarbeitungsmodule befestigt werden können. Die Halterungsmodule sind in ihrem inneren hohl und weisen in ihren Primenseitenflächen 147 nach oben und in Tiefenrichtung T jeweils Löcher auf, durch die Leitungen ins Innere der Halterungsmodule verlegt werden können. Die Oberseiten der Halterungsmodule bilden einen Produktionstisch 111.

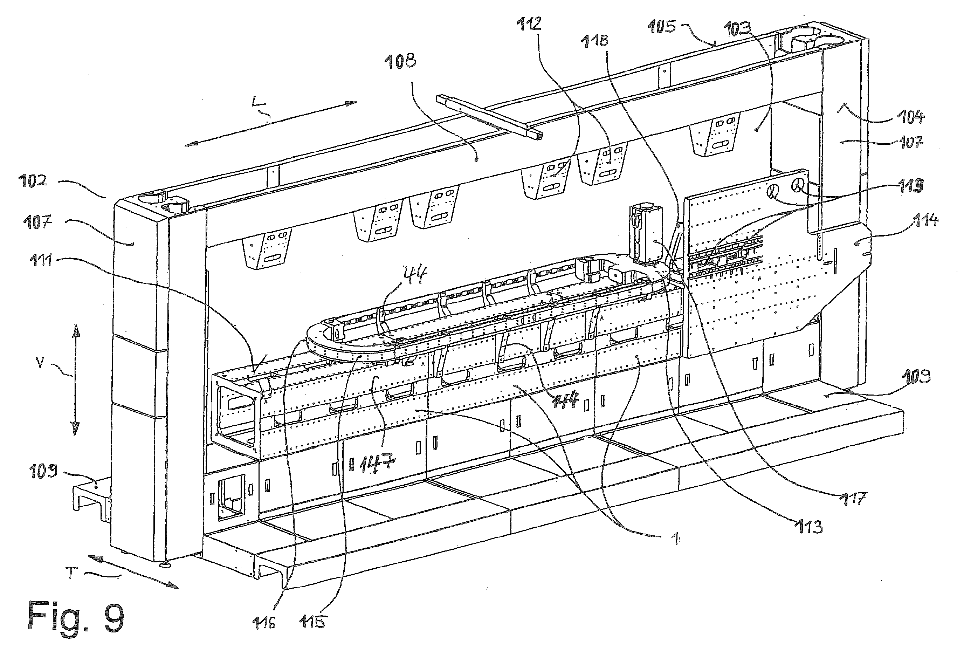

Figur 9 zeigt den Maschinenrahmen 2 mit einer daran angebrachten Fördereinrichtung 13 und einer Montageplatte 14. Die Fördereinrichtung 13 ist an wenigstens einem oder vorzugsweise an allen der Halterungsmodule 1 befestigt. Dabei kann sie sowohl auf den Oberseiten der Halterungsmodule als auch an einer oder mehreren Seiten in Tiefenrichtung T der Halterungsmodule befestigt, bevorzugt verschraubt sein. Im Beispielsfall ist die Fördereinrichtung 113 mittels Konsolen 144, die an vertikalen Anbauflächen 147 der Halterungsmodule angeschraubt sind, oberhalb der Oberseiten der Halterungsmodule angeordnet.

Die Montageplatte 114 ist an einer Prismenseitenfläche 147 eines Halterungsmoduls 1, das am nächsten zu einem der Endpfeiler 107 angeordnet ist, befestigt. Dazu ist die Montageplatte 114 bevorzugt mit der Prismenseitenfläche 147 in Tiefenrichtung T dieses Halterungsmoduls verschraubt und weist zudem vorzugsweise eine Stützeinrichtung 118 auf, mittels der die Innenseite der Montageplatte 114 mit der Oberseite des Halterungsmoduls verbunden ist. Montageplatte 114 und Stützeinrichtung 118 sind Bestandteile des Montageadapters. Ein Abschnitt der Montageplatte 114 überdeckt einen Teil einer Prismenseitenfläche 147 in Tiefenrichtung T des Endpfeilers 107. Die Montageplatte 114 weist eine Vielzahl von Befestigungsmöglichkeiten für Berarbeitungsmodule auf, wobei die Befestigungsmöglichkeiten vorzugsweise als Passbohrungen, Nuten und/oder Gewindebohrungen ausgeführt sind. Weiter weist die Montageplatte 114 mehrere Durchbrüche 119 auf, in die Teile von Berarbeitungsmodulen hineinragen können.

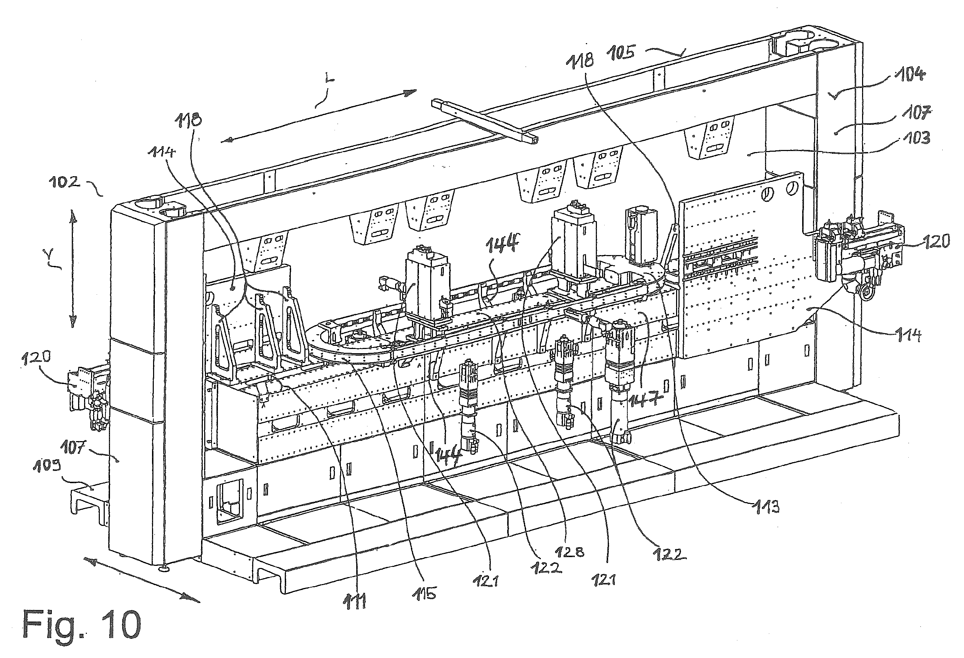

Figur 10 zeigt in einer perspektivischen Darstellung den in Figur 8 - 9 gezeigten Maschinenrahmen 102, der zusätzlich mit Berarbeitungsmodulen und einem zweiten Montageadapter mit Montageplatte 114 ausgerüstet ist. Die zweite Montageplatte 114 hat vorzugsweise die gleiche Form wie die in Figur 9 gezeigte erste Montageplatte 114 und ist an dem Halterungsmodul 1 befestigt, das dem Endpfeiler 107 am nächsten ist, an dem nicht die erste Montageplatte 114 angeordnet ist. Die Montageplatten 114 liegen sich vorzugsweise diagonal gegenüber. In einem weiteren Ausführungsbeispiel können sich zwei oder auch vier Montageplatten 114 in Bezug auf eine Mitte des Montagerahmens 2 in Tiefenrichtung T und/oder Längsrichtung L symmetrisch gegenüberliegen. Während die erste Montageplatte 114 in der Flucht der Rahmenaußenseite 104 liegt, ist die zweite Montageplatte 114 in der Flucht der Rahmenaußenseite 105 angeordnet. An den Abschnitten der Montageplatten 114, die jeweils einen Teil einer Außenseite eines Endpfeilers 107 überdecken, kann eine oder bevorzugt jeweils eine Einzugsstation 120 angeordnet sein. Die Einzugsstation 120 ist für das Einziehen von langgestrecktem Rohmaterial zur Produktion von zu fertigenden Werkstücken vorgesehen. Wahlweise sind auf den Rahmenaußenseiten 104 und 105 an dem Halterungsmodul eine oder mehrere Berarbeitungsmodule 122 angeordnet. Auch diese Berarbeitungsmodule sind so angeordnet und ausgestaltet, dass sie mit Werkzeugen Werkstücke in Halteeinrichtungen, die mit dem Förderband 115 verbunden sind, erreichen können.

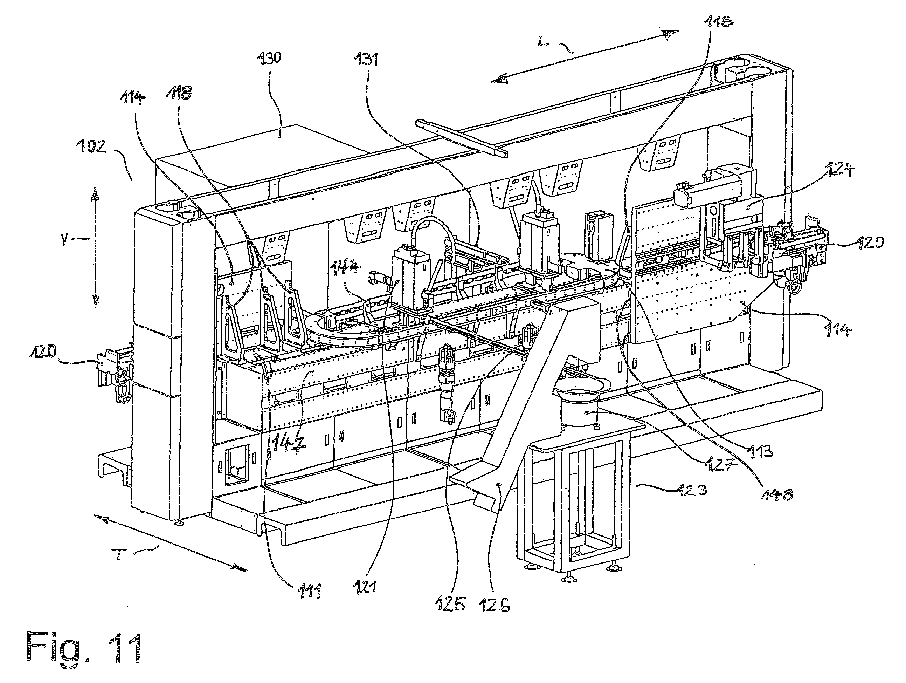

Figur 11 zeigt in perspektivischer Darstellung den in Figur 10 gezeigten Maschinenrahmen 102, mit dem zusätzlich ein weiteres Bearbeitungsmodul 124 an einer Montageplatte 114 und eine Vereinzelungseinrichtung 123 verbunden sind. Außerdem ist schematisch eine Kunststoffspritzgiesstation 130 dargestellt. Das Bearbeitungsmodul 124 ist vorzugsweise als Stanzund/oder Biegestation 124 ausgebildet. Diese verarbeitet vorzugsweise von der Einzugsstation 120 eingezogenes langgestrecktes Rohmaterial zu Komponenten weiter. Von der Stanz- und/oder Biegestation 124 hergestellte Komponenten werden bevorzugt über eine Gleitschiene oder ein Band zu der Fördereinrichtung 113 transportiert, wo sie zur Weiterverarbeitung in Halteeinrichtungen aufgenommen werden. Vorzugsweise ist die Montageplatte 114 so ausgestaltet, dass daran mehrere Stanz- und/oder Biegestationen 124 angebracht werden können. Die Vereinzelungseinrichtung 123 ist bevorzugt mit einem Vibrationsförderer 127 ausgeführt.

Die Montageplatten 114 sind jeweils mit drei Stützeinrichtungen 118 auf der Prismenoberseite 111 befestigt, welche dem Produktionstisch 111 entspricht. Die Stützeinrichtungen 118 sind rahmenförmig mit einem offenen Inneren ausgeführt und mit dem Produktionstisch 111 und ihrer zugehörigen Adapterplatte 114 verschraubt. Die Stützeinrichtungen 118 sind mit ihrer Hauptfläche vertikal ausgerichtet. Die Montageplatten 114 weisen jeweils auf ihrer zu dem Maschinenrahmen 102 gerichteten Seite ein Raster von Befestigungsmitteln für die Stützeinrichtungen 118 auf, an denen die Stützeinrichtungen 118 in verschiedenen Positionen befestigt werden können. Die Positionen der Befestigungsmittel der Raster an der Montageplatte 114 sowie an dem Halterungsmodul 1 sowohl auf dem Produktionstisch 111 als auch auf der Prismenseitenfläche 147 sind so zueinander ausgerichtet, dass eine Befestigung der Adapterplatte 114 an der zugehörigen Prismenseitenfläche 147 durch Fluchtung der Raster und eine Befestigung der Adapterplatte 114 mittels der Stützeinrichtungen 118 auf der Prismenoberseite bzw. dem Produktionstisch 111 möglich ist. Die Einzugseinrichtungen 120 sind jeweils an einem in Längsrichtung L zu den jeweiligen Enden des Maschinenrahmens 102 vorspringenden Abschnitten der Montageplatte 114 montiert.

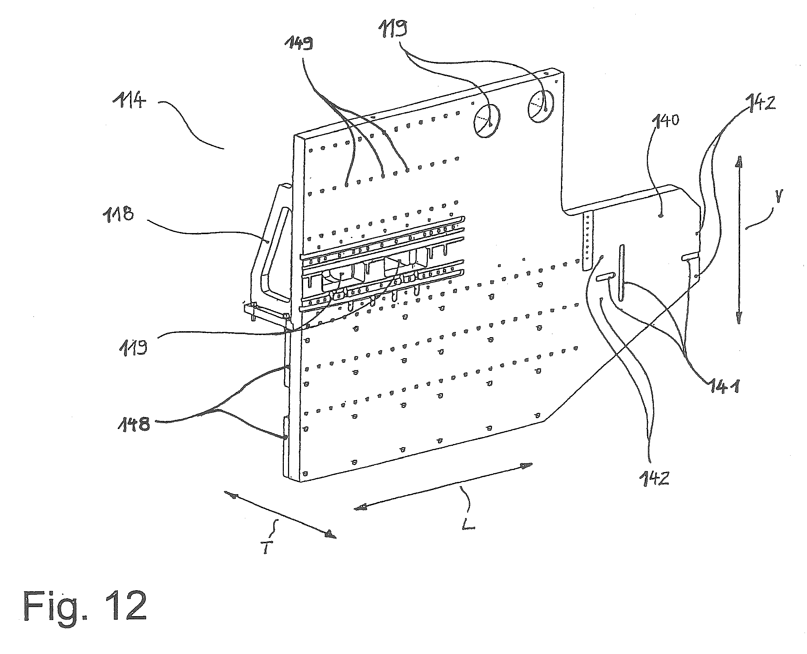

Figur 12 zeigt in einer perspektivischen Ansicht eine Montageplatte 114. Die Montageplatte 114 ist vorzugsweise mit einer oder mehreren Stützeinrichtungen 118 versehen. Sie weist mehrere Durchbrüche 119 auf, die einen runden oder einen rechteckigen oder einen geeignet anders geformten Querschnitt haben können. Ein in der Figur 12 nach rechts vorspringender Abschnitt 140 der Montageplatte 114 ist für die Aufnahme einer Einzugsstation 120 vorgesehen. In dem vorspringenden Abschnitt 140 sind dazu mehrere Nuten 141 sowie Durchgangs- und/oder Gewindebohrungen 142 zur Befestigung der Einzugsstation 120 vorgesehen. In einer an einem Maschinenrahmen 102 montierten Position der Montageplatte 114, wie sie in den Figuren 9, 10 und 11 dargestellt ist, kommt der vorspringende Abschnitt 140 vor einem Endpfeiler 107 zu liegen, so dass eine an der Montageplatte 114 angebrachte Einzugsstation 120 ganz an einem Ende in Längsrichtung L des Maschinenrahmens 102 angeordnet ist. Diese Position ist besonders günstig, weil so Abrollreinrichtungen für langgestrecktes Rohmaterial in Verlängerung der Längsrichtung L der Bearbeitungsanlage aufgestellt werden können. Dadurch ist keine Umlenkung des Rohmaterials zu dem Einzug erforderlich. Der nicht zu dem vorspringender Abschnitt 140 gehörige Teil der Montageplatte 114 ist zur Befestigung von wenigstens einer Stanzund/oder Biegestation 124 vorgesehen. Dazu trägt die Montageplatte 114 auf der dem Betrachter zugewandten Seite mehrere Reihen von Durchgangs-, Gewindebohrungen und/oder Passbohrungen 149. Durch die Vielzahl von Durchgangs-, Gewindebohrungen bzw. Passbohrungen 149 ist es möglich, eine Stanz- und/oder Biegestation 124 an verschiedenen Positionen an der Montageplatte 114 zu befestigen. Die Durchbrüche 119 liegen vorzugsweise in dem nicht zu dem zu dem vorspringenden Abschnitt 140 gehörigen Teil der Montageplatte 114. Außerdem sind in der Montagplatte 114 vorzugsweise Bohrungen zur Befestigung an einem Halterungsmodul 110 vorgesehen.

An der Montageplatte 114 ist eine Abstandhalteeinrichtung 148 an gebracht. Die Abstandhalteeinrichtung 148 ist auf der selben Seite der Montageplatte 114 wie die Stützeinrichtung 118 angeordnet. Die Abstandhalteeinrichtung 148 umfasst zwei langgestreckte Platten 148, die in Längsrichtung L der Montageplatte 114 angeordnet sind. Unterschiedliche Platten 148 können mit der Montageplatte 114 verschraubt sein. Die Platten 148 können verschiedene Dicken aufweisen, um einen Abstand der Montageplatte zu dem Halterungsmodul 1 in Tiefenrichtung T zu bewirken. Auf diese Weise kann die Position von Bearbeitungsmodulen 120, 121, 122, 124 in der Tiefenrichtung T geeignet angepasst werden. Vorzugsweise haben die beiden Platten 148 dieselbe Dicke. Die Verschraubung der Stützeinrichtung 118 mit der Prismenoberseite 111 ist dazu eingerichtet, verschiedene Positionen der Adapterplatte 114 in Tiefenrichtung T auszugleichen, z.B. durch Langlöcher für Schrauben.

## Patentansprüche

1. Modulsystem zum Aufbau einer Halterungsvorrichtung zur Halterung von Bearbeitungsmodulen (120, 121, 122, 124) einer Bearbeitungsanlage,
umfassend wenigstens ein zumindest näherungsweise prismatisches, vorzugsweise quaderförmiges Halterungsmodul (1) zur Anbringung von Bearbeitungsmodulen (120, 121, 122, 124), wobei das Halterungsmodul (1) an wenigstens einer Prismenseitenfläche (147) ein vorbestimmtes Raster von präparierten Befestigungsstellen für Bearbeitungsmodule (120, 121, 122, 124) aufweist,
und umfassend wenigstens einen an dem Halterungsmodul (1) befestigten Montageadapter (114, 118, 148) mit einer Montageplatte zur Anbringung weiterer Bearbeitungsmodule (120, 121, 122, 124) an dem Halterungsmodul (1), wobei der Montageadapter (114, 118, 148) zumindest an der Montageplatte (114) ein weiteres vorbestimmtes Raster an präparierten Befestigungsstellen aufweist, **gekennzeichnet dadurch, dass** der Montageadapter (114, 118, 148) so an dem Halterungsmodul (1) befestigt ist, dass die Montageplatte (114) parallel zu einer Pris - menseitenfläche (147) des Halterungsmoduls (1) diese zumindest teilweise außen überdeckend und über deren Prismenseitenflächenrand hinweg überragend ausgerichtet ist, so dass die weiteren Bearbeitungsmodule (120, 121, 122, 124) von dem Halterungsmodul (1) entfernt angeordnet werden können, indem sie an dem weiteren vorbestimmten Raster des sich von dem Halterungsmodul (1) weg erstreckenden Montageadapters (114, 118, 148) befestigt werden, wobei der Montageadapter (114, 118, 148) wenigstens eine Stützeinrichtung (118) zur Abstützung der Montageplatte (114) an dem Halterungsmodul (1) aufweist, wobei die Stützeinrichtung (118) mit einer Auflagefläche zur Auflage auf dem Halterungsmodul (1) und mit einer Anlagefläche zur Anlage an der Montageplatte (114) versehen ist.

2. Modulsystem nach Anspruch 1, **dadurch gekennzeichnet, dass** das vorbestimmte Raster an dem Montageadapter (114, 118, 148) zumindest insoweit mit dem Raster an dem Halterungsmodul (1) übereinstimmt, dass der Montageadapter (114, 118, 148) mittels seines Rasters an dem Halterungsmodul (1) an Befestigungsstellen von dessen Raster befestigbar ist.

3. Modulsystem nach einem der vorhergehenden Ansprüche, **dadurch gekennzeichnet, dass** sich das Raster von präparierten Befestigungsstellen des Montageadapters (114, 118, 148) über zumindest große Teile einer Hauptfläche der Montageplatte (114) erstreckt.

4. Modulsystem nach einem der vorhergehenden Ansprüche, **dadurch gekennzeichnet, dass** sich das Raster von präparierten Befestigungsstellen des Montageadapters (114, 118, 148), insbesondere an der Montageplatte (114), von dem Raster von präparierten Befestigungsstellen des Halterungsmoduls (1) unterscheidet, insbesondere im Rastermuster.

5. Modulsystem nach einem der vorhergehenden Ansprüche, **dadurch gekennzeichnet, dass** der Montagadapter (114, 118, 148), insbesondere an der Montageplatte (114) wenigstens zwei Raster von präparierten Befestigungsstellen mit eigenem Rastermuster und/oder eigener Rasteranordnung aufweist.

6. Modulsystem nach Anspruch 5, **dadurch gekennzeichnet, dass** sich wenigstens zwei Raster in einem Bereich des Montageadapters (114, 118, 148) gegenseitig durchsetzen.

7. Modulsystem nach einem der vorhergehenden Ansprüche, **dadurch gekennzeichnet, dass** die Befestigungsstellen an der Montageplatte (114) als Gewindebohrungen, Passbohrungen, Sackbohrungen, Durchgangsbohrungen, ein oder mehrere Absätze, Einfräsungen und/oder Nuten ausgebildet sind.

8. Modulsystem nach einem der vorhergehenden Ansprüche, **dadurch gekennzeichnet, dass** der Montageadapter (114, 118, 148) die gesamte Prismenseitenfläche (147) des Halterungsmoduls (1) überspannt, und insbesondere zumindest in einem oberen und einem unteren Bereich der Prismenseitenfläche (147) an dieser befestigt, bevorzugt verschraubt ist.

9. Modulsystem nach einem der vorhergehenden Ansprüche, **dadurch gekennzeichnet, dass** das Raster an präparierten Befestigungsstellen des Montageadapters (114, 118, 148) bereichsweise das gleiche Rastermuster und Rastermaß aufweist wie das Raster an präparierten Befestigungsstellen des Halterungsmoduls (1).

10. Modulsystem nach einem der vorhergehenden Ansprüche, **dadurch gekennzeichnet, dass** die Montageplatte (114) einen vorspringenden Abschnitt (140) für die Aufnahme einer Einzugsstation (120) aufweist, in dem vorzugsweise eine oder mehrere Nuten und/oder Bohrungen, insbesondere Gewindebohrungen, angeordnet sind.

11. Modulsystem nach einem der vorhergehenden Ansprüche, **dadurch gekennzeichnet, dass** die Montageplatte (114) wenigstens einen Durchbruch (119) aufweist, wobei der Durchbruch (119) insbesondere im Wesentlichen rechteckig oder kreisrund ist.

12. Modulsystem nach einem der vorhergehenden Ansprüche, **dadurch gekennzeichnet, dass** die Stützeinrichtung als Stützrahmen ausgeführt ist, wobei die Anlagefläche der Stützeinrichtung (118) rechtwinklig zu der Auflagefläche angeordnet ist, wobei die Auflagefläche mit Befestigungsmitteln zur Befestigung der Stützeinrichtung (118) an dem Halterungsmodul (1) versehen ist, wobei die Befestigungsmittel an einem vorbestimmten Raster von präparierten Befestigungsstellen an einer Prismenoberseite (111) befestigbar sind.

13. Modulsystem nach einem der vorhergehenden Ansprüche, **dadurch gekennzeichnet, dass** wenigstens eine Stützeinrichtung (118) im Bereich eines vorgesehenen Befestigungsorts eines Bearbeitungsmoduls (120, 121, 122, 124), insbesondere einer Stanz-Biege-Station (124), angeordnet ist, insbesondere auf der einem Befestigungsort an der Montageplatte (114) entgegensetzten Seite der Montageplatte (114).

14. Modulsystem nach einem der vorhergehenden Ansprüche, **gekennzeichnet durch** eine Abstandhalteeinrichtung (148), die zwischen dem Halterungsmodul (1) und der Montageplatte (114) vorzusehen ist und zusammen mit dem Montageadapter (114, 118, 148) an dem Halterungsmodul befestigbar ist.

15. Bearbeitungsanlage mit einem Modulsystem nach einem der Ansprüche 1 bis 14 und daran befestigten Bearbeitungsmodulen (120, 121, 122, 124).

## Claims

1. Modular system for the construction of a support device for supporting processing modules (120, 121, 122, 124) of a processing facility,
comprising at least an at least approximately prismatic, preferably cuboid support module (1) for mounting processing modules (120, 121, 122, 124), wherein the support module (1) comprises on at least one prism side surface (147) a predetermined grid of prepared fixing points for processing modules (120 , 121, 122, 124),
and comprising at least one mounting adapter (114, 118, 148) attached to the support module (1) with a mounting plate for mounting further processing modules (120, 121, 122, 124) to the support module (1), wherein said mounting adapter (114, 118 , 148) comprises another predetermined grid of prepared fastening points at least at the mounting plate (114), **characterized in that** the mounting adapter (114, 118, 148) is attached at the support module (1) so that the mounting plate (114) is parallel to a prism side surface (147) of the support module (1), at least partially overlapping the latter outside and extending beyond its prism side surface edge, so that the other processing modules (120, 121, 122, 124) can be arranged remote to the support module (1) by attaching them to the other predetermined grid of the mounting adapter (114, 118, 148) extending away from the support module (1), said mounting adapter (114, 118, 148) comprising at least one support device (118) for supporting the mounting plate (114) at the support module (1), said support device (118) being provided with a resting surface for resting on the support module (1) and with an abutment surface for abutting at the mounting plate (114).

2. Modular system according to claim 1, **characterized in that** the predefined grid at the mounting adapter (114, 118, 148) coincides insofar with the grid at the support module (1) that the mounting adapter (114, 118, 148) can be attached via its grid at the support module (1) at attachment points on its grid.

3. Modular system according to one of the preceding claims, **characterized in that** the grid of prepared fastening points of the mounting adapter (114, 118, 148) extends over at least large parts of a major surface of the mounting plate (114).

4. Modular system according to one of the preceding claims, **characterized in that**, in particular at the mounting plate (114), the grid of prepared fastening points of the mounting adapter (114, 118, 148) is different from the grid of the prepared fastening points of the support module (1), particularly in terms of grid pattern.

5. Modular system according to one of the preceding claims, **characterized in that**, in particular at the mounting plate (114), the mounting adapter (114, 118, 148) has at least two grids of prepared fastening points with their own grid pattern and/or their own grid arrangement.

6. Modular system according to claim 5, **characterized in that** at least two grids in an area of the mounting adapter (114, 118, 148) penetrate each other.

7. Modular system according to one of the preceding claims, **characterized in that** the fastening points at the mounting plate (114) are adapted as threaded bores, fitting bores, blind holes, through bores, one or more steps, milled recesses and/or grooves.

8. Modular system according to one of the preceding claims, **characterized in that** the mounting adapter (114, 118, 148) spans the entire prism side surface (147) of the support module (1) and in particular at least in an upper and a lower area of the prism side surface (147) is attached to the latter, preferably screwed to it.

9. Modular system according to one of the preceding claims, **characterized in that** the grid of prepared fastening points of the mounting adapter (114, 118, 148) has in some parts the same grid pattern and grid dimension as the grid at prepared fastening points of the support module (1).

10. Modular system according to one of the preceding claims, **characterized in that** the mounting plate (114) has a projecting portion (140) for receiving a feeder station (120) in which preferably one or more grooves and / or bores, in particular threaded bores, are arranged.

11. Modular system according to one of the preceding claims, **characterized in that** the mounting plate (114) comprises at least one opening (119), wherein the opening (119) is in particular substantially rectangular or circular.

12. Modular system according to one of the preceding claims, **characterized in that** the support device is designed as a support frame, wherein the abutment surface of the support means (118) is arranged perpendicular to the resting surface, wherein the resting surface is provided with fastening means for fastening said support device (118) at the support module (1), wherein the fastening means can be fastened at a predetermined grid of prepared fastening points at the upper side (111) of the prism.

13. A modular system according to one of the preceding claims, **characterized in that** at least one support means (118) is arranged in the region of an intended fastening site of a processing module (120, 121, 122, 124), in particular a stamping and bending station (124), and in particular at a side of the mounting plate (114) opposed to a fastening point on the mounting plate (114).

14. Modular system according to one of the preceding claims, **characterized by** a spacer means (148) provided between the support module (1) and the mounting plate (114) which can be attached at the mounting adapter (114, 118, 148) at the support module.

15. Processing facility with a modular system according to one of claims 1 to 14 and processing modules (120, 121, 122, 124) attached thereto.

## Revendications

1. Système modulaire pour la construction d'un dispositif de support pour supporter des modules d'usinage (120, 121, 122, 124) d'une installation d'usinage,
comprenant au moins une module de support (1) au moins approximativement prismatique, de préférence parallélépipédique, pour attacher des modules d'usinage (120, 121, 122, 124), le module de support (1) comprenant une grille prédéterminée de points de fixation pour des modules d'usinage (120, 121, 122, 124) à au moins une surface latérale du prisme (147),
et comprenant au moins un adaptateur de montage (114, 118, 148) fixé au module de support (1) avec une plaque de montage pour attacher d'autres modules d'usinage (120, 121, 122, 124) au module de support (1), l'adaptateur de montage (114, 118, 148) comprenant une autre grille prédéterminée de points de fixation au moins à la plaque de montage (114), **caractérisée en ce que** l'adaptateur de montage (114, 118, 148) est attaché de telle sorte au module de support (1) que la plaque de montage (114) est parallèle à une surface latérale du prisme (147) du module de support (1), enchevauchant la dernière au moins partiellement à l'extérieur et s'étendant au-delà de son bord de surface latérale du prisme, de sorte que les autres modules d'usinage (120, 121, 122, 124) peuvent être arrangées éloignés par rapport au module de support (1) en les fixant à l'autre grille prédéterminée de l'adaptateur de montage (114, 118, 148) s'étendant à l'écart du module de support (1), l'adaptateur de montage (114, 118, 148) comprenant au moins un dispositif de support (118) pour supporter la plaque de montage (114) au module de support (1), le dispositif de support (118) étant prévu avec une surface de repos pour reposer sur le module de support (1) et avec une surface d'appui pour reposer contre la plaque de montage (114).

2. Système modulaire selon la revendication 1, **caractérisé en ce que** la grille prédéterminée à l'adaptateur de montage (114, 118, 148) correspond à la grille au module de support (1) au moins de telle sorte que l'adaptateur de montage (114, 118, 148) peut être fixé par sa grille au module de support (1) à des points de fixation de sa grille.

3. Système modulaire selon une des revendications précédentes, **caractérisé en ce que** la grille de points de fixation préparés de l'adaptateur de montage (114, 118, 148) s'étend sur au moins de grandes parties d'une surface principale de la plaque de montage (114).

4. Système modulaire selon une des revendications précédentes, **caractérisé en ce que** la grille de points de fixation préparés de l'adaptateur de montage (114, 118, 148) est en particulier à la plaque de montage (114) différente de la grille de points de fixation préparés du module de support (1), en particulier concernant le dessin de la grille.

5. Système modulaire selon une des revendications précédentes, **caractérisé en ce que** l'adaptateur de montage (114, 118, 148) comprend, en particulier à la plaque de montage (114) au moins deux grilles de points de fixation préparés avec leur propre dessin de grille et/ou leur propre arrangement de grille.

6. Système modulaire selon la revendication 5, **caractérisé en ce qu'**au moins deux grilles se pénètrent mutuellement dans la région de l'adaptateur de montage (114, 118, 148).

7. Système modulaire selon une des revendications précédentes, **caractérisé en ce que** les points de fixation à la plaque de montage (114) sont en forme de perçages taraudé, alésages de positionnement, alésages borgnes, perçages traversant, une ou plusieurs échelles, fraisages et/ou rainures.

8. Système modulaire selon une des revendications précédentes, **caractérisé en ce que** l'adaptateur de montage (114, 118, 148) recouvre l'entière surface latérale du prisme (147) du module de support (1) et est attaché, de préférence vissé, en particulier au moins dans une région supérieure et inférieure de la surface latérale du prisme (147).

9. Système modulaire selon une des revendications précédentes, **caractérisé en ce que** la grille de points de fixation préparés de l'adaptateur de montage (114, 118, 148) comprend par endroits le même dessin de grille et la même dimension de grille que la grille de points de fixation préparés du dispositif de support (1).

10. Système modulaire selon une des revendications précédentes, **caractérisé en ce que** la plaque de montage (114) comprend une section en saillie (140) pour recevoir une station de saisi (120), où de préférence une ou plusieurs rainures et/ou perçages, en particulier perçages taraudés sont arrangés.

11. Système modulaire selon une des revendications précédentes, **caractérisé en ce que** la plaque de montage (114) comprend au moins une ouverture (119), l'ouverture (119) étant en particulier essentiellement rectangulaire ou circulaire.

12. Système modulaire selon une des revendications précédentes, **caractérisé en ce que** le dispositif de support est réalisé sous forme de cadre de support, la surface d'appui du dispositif de support (118) est arrangée de manière perpendiculaire à la surface de repos, la surface de repos étant prévue avec des moyens de fixation pour fixer le dispositif de support (118) au module de support (1), où les moyens de fixation peuvent être fixés à une grille prédéterminée de points de fixation à une surface supérieure du prisme (111).

13. Système modulaire selon une des revendications précédentes, **caractérisé en ce qu'**au moins un dispositif de support (118) est réalisé dans la région d'un point de fixation d'un module d'usinage (120, 121, 122, 124), en particulier d'une station poinçonnage-pliage (124), en particulier à un côté de la plaque de montage (114) opposé à un point de fixation de la plaque de montage (114).

14. Système modulaire selon une des revendications précédentes, **caractérisé par** un dispositif d'espacement (148) qui est à prévoir entre le module de support (1) et la plaque de montage (114) et qui peut être fixé au module de support avec l'adaptateur de montage (114, 118, 148).

15. Installation d'usinage avec un système modulaire selon une des revendications 1 à 14 et avec des modules d'usinage (120, 121, 122, 124) fixés à celui-ci.
